# EUROPEAN PATENT APPLICATION

(11) **EP 1 645 192 A1**
(43) Date of publication of application: **12.04.2006**
(21) Application number: 04077947.2
(22) Date of filing: 07.10.2004
(51) Int. Cl.: A23D 7/01, A23J 3/08, A23J 3/16, A23J 3/18

(54) **Process of preparing a water-continuous filled gel composition**

(71) Applicant: Wageningen Centre for Food Sciences, 6703 GW Wageningen (NL)
(72) Inventor: Van de Velde, Freddie, 6715HJ Ede (NL)
(74) Representative: van Westenbrugge, Andries

(57) **Abstract**

The present invention relates to a process of preparing a water-continuous filled gel composition, said process comprising the steps of:
a. providing an aqueous suspension containing at least 0.5 wt.% of protein aggregates capable of cold gelation;
b. combining said aqueous suspension with a composition containing at least 5 wt.% lipids in a weight ratio of 97:3 to 10:90 to produce a filled suspension;
c. adding a pH lowering agent to the aqueous suspension, the lipids containing composition and/or the filled suspension; and
d. allowing the pH of the filled suspension to a decrease to a level causing cold gelation of the protein aggregates.

## Description

### TECHNICAL FIELD OF THE INVENTION

The present invention relates to a process of preparing a water-continuous filled gel composition, more particularly a filled gel composition that comprises a lipid material, e.g. fat, that is homogeneously dispersed throughout a continuous protein gel matrix. The present process utilises cold gelation of protein aggregates, said cold gelation being achieved by pH reduction.

The process according to the invention enables the manufacture of filled gel compositions in a very controlled and reproducible fashion. In particular, the present process enables the manufacture of filled gel compositions that exhibit a homogeneous lipids distribution of relatively small mean diameter. Furthermore, the process of the invention can be performed without the occurrence of problems such as creaming, flocculation, coalescence and phase separation.

### BACKGROUND OF THE INVENTION

Especially in the food industry it is well-recognised that the properties of products based on filled gel systems, in particular their rheological behaviour, are strongly dependent on the volume fraction of dispersed oil droplets, on the size of the oil droplets and on the interaction between the gel matrix and the filler particles. Examples of food products based on filled gel systems are yoghurt and (processed) cheese, in which oil droplets are entrapped in a continuous protein network.

The preparation of filled gel compositions containing a lipid phase dispersed in a continuous aqueous phase that has been gelled with the help of a protein is known from the

### prior art.

US 4,217,370 describes a process for making lipid-containing foodstuffs comprising solubilising particulate proteinaceous matter, admixing a lipid material so as to form an emulsion, and contacting the emulsion with an effective amount of a pH adjusting agent to lower the pH to its isoelectric point, thereby aggregating the protein and simultaneously microencapsulating the lipid. Suitable proteinaceous materials are said to include beef, pork, poultry, fish, milk whey, cheese, soybeans and the like.

EP-A 1 201 134 describes a method for making a cream cheese-like product, the method comprising:
- mixing a non-casein protein, a fat, and water to form a mixture;
- subjecting the mixture to a first homogenisation to form a protein matrix stabilised emulsion system;
- heating the protein matrix stabilised emulsion system to a temperature and for a time effective to denature the proteins to form a denatured protein matrix stabilised emulsion;
- adjusting the pH of the denatured protein matrix stabilised emulsion to about 4 to about 6;
- subjecting the pH-adjusted emulsion to a second homogenisation to form the cream cheese-like product; and
- packaging the cream cheese-like product.
Whey proteins and soy proteins are mentioned as suitable sources of non-casein protein.

EP-A 1 249 176 describes a process for preparing a whey protein-stabilised fatty emulsion comprising
- acidifying an aqueous solution of one or more whey proteins below their iso-electric pH;
- blending and homogenising the acidified solution of whey proteins with one or more fats to form a whey protein-stabilised fatty emulsion, and
- heat-treating said whey-stabilised fatty emulsion at a temperature of more than 80°C. According to the European patent application any food grade acid, such as lactic, citric, phosphoric, hydrochloric acid and any acidulant such as glucono-δ-lactone or vinegar may be used, alone or in combination of two or more thereof.

The above processes suffer from the drawback that during processing the intermediate non-gelled oil-in-water emulsion is prone to destabilisation as evidenced by undesirable phenomena such as creaming, flocculation, coalescence and phase separation. These undesirable phenomena become particularly manifest when the manufacturing process is stalled, e.g. as a result of problems with the packaging line.

### SUMMARY OF THE INVENTION

The inventors have developed an improved process for the manufacture of filled gel compositions that comprise lipids dispersed in a gelled protein matrix. The process according to the present invention does not suffer from the drawbacks of the prior art methods. More particularly, the present method enables the preparation of a filled gel composition with a very finely dispersed lipid phase. Furthermore the present method is particularly robust in that it does not employ components or intermediates that tend to destabilise.

The method according to the present invention is characterised in that it comprises the steps of :
a. providing an aqueous suspension of protein aggregates capable of cold gelation;
b. combining said aqueous suspension with a lipids containing composition to produce a filled suspension; and
c. employing a pH lowering agent to decrease the pH of the filled suspension to a level effective of causing cold gelation of the protein aggregates.

The aqueous suspension of protein aggregates employed in the process of the invention is very stable. Likewise it is feasible to provide a lipids containing composition that does not tend to destabilise. Such a composition may consists of pure lipids or alternatively, it may be a lipids-in-water or water-in-lipids emulsion. By adding the pH lowering agent (e.g. an acid, a slow release acidogen or an acid producing micro-organism) either before the aqueous suspension and lipids containing composition are combined or shortly after these two components have been combined, the cold gelation process will function to stabilise the filled suspension shortly after its preparation.

Thus, the present process offers the advantage that the risk of product destabilisation during processing is minimised. The present process is very robust in that a temporary process stand-still will not automatically produce significant waste streams, particularly not if the combining of the aqueous phase and the lipids containing composition is carried out in a continuous fashion and the resulting filled suspension is packaged and sealed shortly after addition of the pH lowering agent.

### DETAILED DESCRIPTION OF THE INVENTION

Accordingly, the present invention relates to a process of preparing a water-continuous filled gel composition, said process comprising the steps of:
a. providing an aqueous suspension containing at least 0.5 wt.% of protein aggregates capable of cold gelation;
b. combining said aqueous suspension with a composition containing at least 5 wt.% lipids in a weight ratio of 97:3 to 10:90 to produce a filled suspension;
c. adding a pH lowering agent to the aqueous suspension, the lipids containing composition and/or the filled suspension; and
d. allowing the pH of the filled suspension to a decrease to a level causing cold gelation of the protein aggregates.

The term "lipids" as used herein refers to hydrophobic ingredients that are immiscible with water. More particularly, the term lipids encompasses fatty acid esters such as mono-, di-and triglycerides and sucrose fatty acid polyesters as well as mixtures thereof. Most preferably, the lipids employed in accordance with the present invention are mixtures or pure forms of triglycerides (e.g. butter fat, vegetable oils, animal fats and marine oils, as well as fractionated, hydrogenated and/or interesterified triglyceride compositions derived from one or more of these triglyceride sources).

Generally, the preparation of protein gels can be viewed as involving three distinct mechanisms: denaturation, aggregation and gelation. In so called heat-set gelation methods these mechanisms proceed concurrently during a single heat treatment. In cold-set gelation (or cold gelation) methods, denaturation and aggregation are separated from the gelation. In accordance with the present cold gelation process, protein aggregates are first prepared by heating and/or pressurising a solution of native proteins at a pH well above the isoelectric point of the protein and essentially in the absence of salt (ionic strength less than 0.5 M, preferably less than 0.1 M). In the second step, an acid-induced cold-set gel is formed by lowering the pH towards the isoelectric point of the protein aggregates.

An essential element of cold gelation in accordance with the present invention is the use of an aqueous suspension (or dispersion) of 'activated' protein aggregates which are capable of forming a protein network upon lowering of the pH. In the present process cold gelation occurs at a temperature below 60 °C, preferably below 50 °C, more preferably below 40 °C. Typically, during cold gelation the temperature of the filled suspension is maintained above 0 °C, preferably above 3 °C.

In order to allow the cold gelation process to proceed at lower temperatures, the temperatures of the aqueous suspension and the lipids containing composition are suitably adjusted in such a way that the resulting filled suspension has a temperature of less than 60 °C, 50 °C or even 40 °C. Alternatively, if (i) after combining the temperature of the filled suspension exceeds these temperatures or (ii) the filled suspension is briefly heated to above these temperatures, e.g. to pasteurise the suspension, the filled suspension is cooled down rapidly. Preferably, the cooling rate applied is effective in reducing the temperature to less than 60 °C, 50 °C or even 40 °C within 10 minutes so as to allow the cold gelation to proceed at near ambient temperatures.

According to a preferred embodiment, the aqueous suspension employed in the present process contains at least 0.8 wt.%, more preferably at least 1 wt.% of protein aggregates. Typically, the amount of the aforementioned aggregates in the aqueous suspension does not exceed 20 wt.%, preferably it does not exceed 15 wt.%. The higher the concentration of these aggregates in the filled suspension, the stronger a gel network may be obtained through cold gelation. The desired gel strength is largely dependent on the anticipated use of the filled gel composition. For instance, a relatively weak gel network is required in stirred yoghurt, whereas desserts such as puddings require as much stronger gel network. The content of protein aggregates in the filled suspension typically exceeds 0.4 wt.%. Preferably said content is at least 0.5 wt.%, more preferably at least 0.8 wt.% and most preferably at least 1.0 wt.%.

The lipids containing composition employed in the present process may essentially consist of lipids or alternatively, it may be a lipids-in-water or water-in-lipids emulsion. According to a particularly preferred embodiment the lipids containing composition is a lipid-in-water emulsion. The use of a lipid-in-water emulsion offers the advantage that a stable filled suspension can be produced without the need of applying high shear forces. By first preparing a lipid-in-water emulsion and subsequently combining said emulsion with the protein aggregates containing suspension a filled suspension can be obtained in a more efficient and controlled manner than if pure lipids are combined with a protein aggregates containing suspension. The benefits of this embodiment are particularly pronounced in the preparation of filled suspensions that contain relatively low amounts of dispersed lipids, e.g. less than 30 wt.% lipids, or even less than 15 wt.% lipids. Typically, the average droplet-size of the lipids in the lipid-in-oil water emulsion is in the range of 0.1-10 *µ*m, preferably in the range of 0.3-3 *µ*m. The average droplet size of the dispersed lipid phase is suitably determined by means of light scattering techniques.

According to a particularly preferred embodiment, the lipid-in-water emulsion contains at least 0.5 wt.%, preferably at least 1 wt.% protein aggregates capable of cold gelation. The inventors have found the latter emulsion to be surprisingly stable. Thus, utilisation of such a stabilised emulsion in the present process makes the present process even more robust.

The addition of the pH lowering agent in the present process may suitably occur before the aqueous suspension and the lipid composition are combined, meaning that the agent is added to the suspension or the lipid composition or both. It is also feasible to add the pH lowering agent to the filled suspension obtained after combining the aqueous suspension and the lipid composition. If the system to which pH lowering agent is added contains aggregates of cold gelling protein, gelation will commence shortly after addition. It is preferred to add the pH lowering agent not earlier than 10 minutes, preferably not earlier than 5 minutes before the moment the aqueous suspension is combined with the lipids containing composition.

The inventors have observed that cold gelation of the filled suspension contributes to the stabilisation of said filled suspension. Hence, in an advantageous embodiment of the present process the pH lowering agent is added to the filled suspension not later than 10 minutes after the aqueous suspension has been combined with the lipids containing composition. Preferably, said addition occurs not later than 5 minutes, more preferably not later than 2 minutes and most preferably not later than 1 minute after the aqueous suspension and the lipid containing composition have been combined.
As result of the addition of the pH lowering agent the pH of the filled suspension is typically reduced by at least 1.0 unit, preferably by at least 1.5 units. Typically, the pH is decreased in step d. to below 6.0. In case the protein aggregates largely consist of whey protein or egg protein, the pH of the filled suspension is preferably decreased in step d. to below 6.0, more preferably to below 5.7, even more preferably to below 5.4 and most preferably to below 5.2. Preferably, in the present method the pH of the filled suspension is decreased to a pH of 4.0 or more, more preferably of 4.2 or more. In order to achieve cold gelation the pH should be decreased to a value close to the iso-electric point of the protein aggregates, e.g. a pH within 0.8 units of said iso-electric point. Even more preferably, the pH is decreased to the aforementioned iso-electric point or to at most 0.8 units below said iso-electric point. The isoelectric points of the cold gelling proteins β-lactoglobulin and ovalbumin are about 5.1 and about 4.8 respectively.

In a particularly preferred embodiment of the present process the pH lowering agent employed is a slow release acidogen. As used herein, the term "slow release acidogen" or "acidogen" refers to any substance essentially neutral from the point of view of pH and capable, after solubilization in an aqueous medium, of being progressively converted into an acid. Suitable acidogens include acid anhydrides; lactides and particularly those with a low melting point of lactic acid; lactones and mixtures thereof. The utilisation of a slow release acidogen in the present process offers the advantage that the acidogen can easily be dispersed homogeneously throughout the filled suspension without the simultaneous occurrence of gelation. Furthermore, the use of such an acidogen offers the advantage that the filled suspension will remain pumpable for some time after the addition of the acidogen. Thus, the filled suspension can be filled off easily and production standstill will not immediately lead to a clogging up of the production line.

The slow release acidogen employed in the present process should be capable of inducing a substantial pH decrease even if added in minor quantities. In addition, said pH decrease should occur relatively slowly. Accordingly, in a preferred embodiment, the slow release acidogen employed in the present process, when added to a 3% (w/w) aqueous whey protein aggregate suspension in a concentration of 0.24% (w/w), reduces the pH to less than 5.4. Typically, at 25 °C, half of the overall pH reduction is realised not earlier than 10 minutes after addition, more preferably not earlier than 30 minutes and most preferably not earlier than 60 minutes after addition. Usually half of the pH reduction is achieved within 12 hours after addition of the acidogen. The slow release acidogen employed preferably is an acid anhydride, a lactide, a lactone or a combination thereof. Examples of suitable acid anhydrides include propionic anhydride, propionic-isovaleric mixed anhydride, acetic-isovaleric mixed anhydride, acetic-valeric mixed anhydride and acetic-butyric mixed anhydride. Even more preferably, the slow release acidogen is a lactone capable of releasing a hydroxy acid (e.g. gluconic acid) when dissolved in water. Most preferably the slow release acidogen is selected from the group consisting of gluconodeltalactone, glucoheptonolactones, erythronic acid-lactone, galactonic acid-lactone, glucuronic acid-lactone and combinations thereof.

In another preferred embodiment of the present process the pH lowering agent employed is a micro-organism capable of generating enough acid to achieve the necessary reduction in pH. In accordance with this embodiment the filled suspension is subjected to microbial acidification so as to lower the pH to a level at which the protein aggregates will start forming a gel network. Typical examples of micro-organism that may suitably be used as pH lowering agent include *Lactobacillus* species, *Lactococcus* species, *Propionibacterium* species, *Bifidobacterium* species, *Leuconostoc species, Propionibacterium species, Gluconobacter species, Pediococcus species, Acetobacter, Clostridium, Bacillus species, Carnobacterium species.* Preferably the micro-organism is selected from the group consisting of *Lactococcus* species, *Propionibacterium* species, *Bifidobacterium* species *and*/*or Acetobacter.* More information as to how such micro-organisms may be employed in the cold gelation of protein aggregate suspension can be found in WO 2003/011040, which is included herein by reference.

The filled gel composition obtained in the present process contains water, fat, protein and possibly additional ingredients. Typically; the filled gel composition obtained from the present process contains 40-98 wt.% water; 0.5-50 wt.% fat and 1-20 wt.% of gelled protein. More preferably, the filled gel composition contains 60-94 wt.% water, 5-40 wt.% fat and 1-10 wt.% of gelled protein.

The protein aggregates employed in the present process preferably have a hydrodynamic radius in the range of 10-500, more preferably in the range of 15-200 nanometers. The hydrodynamic radius of the aggregates can suitably be determined by means of light scattering techniques.

In the present process cold gelation of the protein aggregates in the filled suspension is achieved by reducing the pH to near the iso-electric point of the protein constituting the major fraction of the aggregates. As a result, a network of protein aggregates is formed. In the case of thiol-containing proteins in the aggregates, the thiol groups present on the surface of the aggregates of the protein will react to form disulfide bridges between the aggregates. Thus, chemically linked aggregates are formed which together form a gel network. Although the presence of thiol groups is not essential, the amount of thiol groups on the surface of the protein aggregates determines to a large extent the mechanical properties of the gel network. Preferably, the cold gelling aggregates employed in the present process are based on proteins that are capable of forming aggregates under the influence of heat and/or pressure and that contain a significant amount of thiol groups. Consequently, in a preferred embodiment, the protein present in the aggregates contains at least 0.0001wt.% cystein, more preferably at least 0.02 wt.% cystein.

The protein present in the aggregates capable of cold gelation is suitably selected from the group consisting of whey proteins, soy proteins, egg proteins, blood serum proteins, wheat germ proteins and mixtures thereof. More preferably, said protein is selected from the group consisting of whey proteins, soy proteins and egg proteins. Even more preferably, the protein is whey protein, most preferably enriched in β-lactoglobulin. Whey protein employed in the present process originates from mammalian milk, especially milk from cow, goat or sheep. Most preferably, the whey protein is bovine whey protein. Egg protein used in the present process originates from bird's egg, preferably from hen's egg.

Casein can have a detrimental effect on the gel characteristics of the protein gel obtained in the present process. Particularly good results can be obtained with the present process if the aqueous suspension is free of or contains less than 5% casein by weight of water and if the weight ratio casein : protein contained in the aggregates in the aqueous suspension is less than 1:1, preferably less than 1:2. Likewise, in preferred embodiment, the filled suspension is free of or contains less than 5% casein by weight of water and the weight ratio of casein : protein contained in the aggregates is less than 1:1, preferably less than 1:2. The same applies to the lipid containing composition in case said composition contains cold gelling protein aggregates.

The protein aggregates employed in the present process can suitably be prepared by heat treatment and/or high pressure treatment of an aqueous solution of these proteins. Preferably, a very substantial fraction of the proteins contained in the aqueous solution has been converted into cold gellable protein aggregates. Accordingly, in a preferred embodiment, at least 60 wt.%, preferably at least 90 wt.% of the protein in the aqueous suspension is contained in the protein aggregates.

In a particularly preferred embodiment of the invention, following the addition of the acidogen, the filled suspension is packaged in a sealed container and cold gelation is allowed to largely occur within the sealed container. Thus, the filled suspension can be introduced into the container when still fluid and aseptic filling conditions can be realised relatively easily.

The cold gelation of the protein in accordance with the present invention typically yields a relatively viscous filled gel composition with a discharge time at 6°C and with an outlet diameter of 8mm of at least 10, preferably of at least 15 seconds. The discharge time of the filled suspension is suitably determined by means of a funnel of Posthumus (C. Hellinga, D.J. Somsen and J.P.J.M. Koenraads. 1986. Viscosity of stirred yoghurt: modem techniques useful in analysing and improving routine measurements. Neth. Milk Dairy J. 40:217-240; G. Posthumus. 1954. Meten van de viscositeit, een toestelletje voor het bepalen van de viscositeit van enkele consumptiemelkproducten. Officieel Orgaan van de Koninklijke Nederlandse Zuivelbond 4:55-56). In a particularly preferred embodiment, the present process produces a filled gel composition in the form of a rigid gel that does not exhibit flow behaviour. Such a rigid gel is characterised by a fracture stress of at least 1 kPa, preferably of at least 2 kPa. The fracture stress of the filled gel composition is suitably determined by means of an uniaxial compression device using two parallel plates.

The present process can suitably be employed to produce a variety of filled gel compositions, in particular such compositions that can be consumed as foodstuffs or that may be employed in the manufacture of foodstuffs, as well as cosmetic products (e.g. creams and gels) and pharmaceutical preparations (e.g. ointments). In a particularly preferred embodiment of the invention. the filled gel composition obtained from the present process is a dessert, a custard, a spread, (drinking) yoghurt, cheese or mayonnaise.

### EXAMPLES

### Example 1

### Preparation of an aqueous suspension:

A 9% (w/w) whey protein isolate (Bipro^{™} ex Davisco International Inc.) solution was prepared by dissolving the powdered protein in distilled water at room temperature and stirring for at least 2 hours, until all the protein is dissolved. Next, reactive whey protein isolate (WPI) aggregates were prepared by heating the solution in a water bath for 2 hours at 68.5 °C followed by cooling to room temperature using running tap water. The aggregates suspension so obtained was very stable and did not show any phase separation when left standing for at least 1 week at 4 °C.

### Preparation of an oil-in-water emulsion:

An oil-in-water emulsion was prepared by homogenising weighed amounts of peanut oil (40% (w/w)) and aqueous phase (60% (w/w)). In this example a fraction of the above mentioned aqueous suspension was employed as the aqueous phase.

A pre-emulsion was prepared using an Ultra Turrax Polytron^{™} (ex KINEMATICA AG, Switzerland). The pre-emulsion was homogenized using a Laboratory Homogenizer Ariete^{™} (Model NS1001L ― PANDA, Niro Soavia S.P.A., Italy) operating at 300 bar.

The emulsion so obtained was very stable and did not suffer significant destabilisation phenomena when left standing for at least 3 days at room temperature.

### Preparation of a filled gel composition:

The WPI aggregate suspension was diluted with water in the ratio of 14:36 (w/w). Glucono-δ-lactone (USP-grade ex Sigma Chemical Company) was added as a powder to the WPI aggregates suspension to induce cold gelation at room temperature. To reach a pH in the final product of around 5, glucono-δ-lactone (GDL) was added in a concentration of 0.58% (w/w) to the diluted suspension. This concentrations was calculated with the formula: (0.067 × (% WPI aggregates in the aqueous phase of the filled gel) + 0.0225) obtained from the data of Alting (A.C. Alting, *Cold gelation of globular proteins ― Thesis* **2003**, Wageningen University, the Netherlands).

Immediately after the addition of GDL, the diluted aggregates suspension was combined with the oil-in-water emulsion in the ratio of 50:50 (w/w). Thus, the aggregates suspension, oil-in-water emulsion, and water were combined in a weight ratio of 14 : 50 : 36. The final composition of the filled protein gel was 4.0 % (w/w) of WPI aggregates and 20 % (w/w) of peanut oil.

The microstructure, rheology and stability of the filled gel composition thus obtained were analysed. The results obtained are presented in Table 1.

### Example 2

Example 1 was repeated except that the aggregates suspension was combined with the oil-in-water emulsion and water in a weight ratio of 15 : 25 : 60. The final composition of the filled protein gel was 2.7 % (w/w) of WPI aggregates and 10 % (w/w) of peanut oil. The microstructure, rheology and stability of the filled gel composition thus obtained were analysed. The results obtained are presented in Table 1.

### Example 3

Example 1 was repeated except that the oil-in-water emulsion was directly acidified without the addition of aggregates suspension or water. Thus, the final composition of the filled protein gel was 5.4 % (w/w) of WPI aggregates and 40 % (w/w) of peanut oil. The microstructure, rheology and stability of the filled gel composition thus obtained were analysed. The results obtained are presented in Table 1.

### Example 4

Example 1 was repeated except that the oil-in-water emulsion was prepared at an operating pressure of 440 bar. Moreover, the emulsion was passed trough the homogeniser a second time at 400 bar, in order to further reduce the size of the oil droplets. The final composition of the filled protein gel was 4.0 % (w/w) of WPI aggregates and 20 % (w/w) of peanut oil. The microstructure, rheology and stability of the filled gel composition thus obtained were analysed. The results obtained are presented in Table 1.

### Example 5

Example 3 was repeated except that this time the emulsion was prepared using an aqueous phase consisting of a 2.7% (w/w) WPI aggregates suspension. This suspension was prepared by diluting the 9% (w/w) aggregates suspension described in example 1. The emulsion so obtained was very stable and did not suffer significant destabilisation phenomena when left standing for at least 3 days at room temperature.

The final composition of the filled protein gel was 1.6 % (w/w) of WPI aggregates and 40 % (w/w) of peanut oil. The microstructure, rheology and stability of the filled gel composition thus obtained were analysed. The results obtained are presented in Table 1.

### Example 6

Example 1 was repeated except that this time the emulsion was prepared from an aqueous phase that had been prepared previously by dissolving WPI at a concentration of 9% (w/w) in distilled water at room temperature and stirring until all the protein was dissolved. The oil-in-water emulsion so obtained was heated in a water bath at 68.5 °C for 2 hours and subsequently cooled down to room temperature with running tap water. The emulsion so obtained was very stable and did not suffer significant destabilisation phenomena when left standing for at least 3 days at room temperature.

The 9% (w/w) WPI aggregates suspension was combined with the aforementioned oil-in-water emulsion and water in a weight ratio of 14 : 50 : 36. The final composition of the filled protein gel was 4.0 % (w/w) of WPI aggregates and 20 % (w/w) of peanut oil. The microstructure, rheology and stability of the filled gel composition thus obtained were analysed. The results obtained are presented in Table 1.

### Example 7

Example 1 was repeated except that this time the emulsion was prepared from an aqueous phase that had been prepared previously by dissolving the WPI 2.7% (w/w) in distilled water at room temperature and stirring until all the protein was dissolved. The emulsion so obtained was very stable and did not suffer significant destabilisation phenomena when left standing for at least 3 days at room temperature.

The 9% (w/w) WPI aggregates suspension was combined with the aforementioned oil-in-water emulsion and water in a weight ratio of 25 : 35 : 40. The final composition of the filled protein gel was 3.2 % (w/w) of WPI aggregates and 10 % (w/w) of peanut oil. The aforementioned filled protein gel showed signs of destabilisation as evidenced by a creamed toplayer. The microstructure, rheology and stability of the filled gel composition thus obtained were analysed. The results obtained are presented in Table 1.

### Example 8

Example 1 was repeated except that sunflower oil was used to prepare the oil-in-water emulsion. The final composition of the filled protein gel was 4.0 % (w/w) of WPI aggregates and 20 % (w/w) of sunflower oil. The microstructure, rheology and stability of the filled gel composition thus obtained were analysed. The results obtained are presented in Table 1.

### Example 9

Example 1 was repeated except that hydrogenated vegetable fat (Akocheese^{™} ex Karlshamns AB) was used to prepare the oil-in-water emulsion. The emulsion was homogenised at a temperature of 55°C. The final composition of the filled protein gel was 4.0 % (w/w) of WPI aggregates and 20 % (w/w) of hydrogenated vegetable fat. The microstructure, rheology and stability of the filled gel composition thus obtained were analysed. The results obtained are presented in Table 1.

### Example 10

### Preparation of an aqueous suspension of ovalbumin aggregates:

A 5% (w/w) ovalbumin (Albumin from chicken egg white, grade III ex Sigma Chemical Company) solution was prepared by dissolving the powdered protein in distilled water at room temperature and stirring for at least 2 hours, until all the protein was dissolved. Next, reactive ovalbumin aggregates were prepared by heating the solution in a water bath for 22 hours at 78 °C followed by cooling to room temperature using running tap water. The aggregates suspension so obtained was very stable and did not show any phase separation when left standing for at least 1 week at 4 °C.

### Preparation of a filled gel composition:

The procedure of Example 8 was repeated except that the aforementioned ovalbumin aggregates suspension was combined with the oil-in-water emulsion (40% (w/w) sunflower oil and 5.4% (w/w) WPI aggregates) and water in a weight ratio of 26 : 50 : 24. The final composition of the filled protein gel was 4.0 % (w/w) of protein aggregates and 20 % (w/w) of sunflower oil. The microstructure, rheology and stability of the filled gel composition thus obtained were analysed. The results obtained are presented in Table 1.

### Example 11

### Preparation of an oil-in-water emulsion:

An oil-in-water emulsion was prepared by homogenising weighed amounts of sunflower oil (40% (w/w)) and aqueous phase (60% (w/w)) as described in example 1. In this example a fraction of the ovalbumin aggregates aqueous suspension as described in example 10 was employed as the aqueous phase.

### Preparation of a filled gel composition:

Example 8 was repeated except that the 9% (w/w) WPI aggregates suspension as described in example 1 was combined with the aforementioned oil-in-water emulsion (40% (w/w) sunflower oil and 3% (w/w) ovalbumin aggregates) and water in a weight ratio of 28 : 50 : 22. The final composition of the filled protein gel was 4.0 % (w/w) of protein aggregates and 20 % (w/w) of sunflower oil. The microstructure, rheology and stability of the filled gel composition thus obtained were analysed. The results obtained are presented in Table 1.

### Example 12

Example 10 was repeated except that the 5% (w/w) ovalbumin aggregates suspension was combined with the oil-in-water emulsion as described in example 11 (40% (w/w) sunflower oil and 3% (w/w) ovalbumin aggregates) in a weight ratio of 50 : 50. The final composition of the filled protein gel was 4.0 % (w/w) of ovalbumin aggregates and 20 % (w/w) of sunflower oil. The microstructure, rheology and stability of the filled gel composition thus obtained were analysed. The results obtained are presented in Table 1.

### Example 13

### Preparation of an aqueous suspension:

A 3% (w/w) whey protein isolate (Bipro^{™} ex Davisco International Inc.) solution was prepared by dissolving the powdered protein in distilled water at room temperature and stirring for at least 2 hours, until all the protein is dissolved. Next, reactive whey protein isolate (WPI) aggregates were prepared by heating the solution in a water bath for 24 hours at 68.5 °C followed by cooling to room temperature using running tap water. The aggregates suspension so obtained was very stable and did not show any phase separation when left standing for at least 1 week at 4 °C.

### Preparation of an oil-in-water emulsion:

An oil-in-water emulsion was prepared by homogenising weighed amounts of sunflower oil (40% (w/w)) and aqueous phase (60% (w/w)) according to the procedure described in example 1. In this example a fraction of the above mentioned aqueous suspension was employed as the aqueous phase. The emulsion so obtained was very stable and did not suffer significant destabilisation phenomena when left standing for at least 3 days at room temperature.

Using the procedure described in example 1 the aforementioned aggregates suspension (3% (w/w) WPI aggregates) was combined with the aforementioned oil-in-water emulsion (40% (w/w) sunflower oil and 1.8% (w/w) WPI aggregates) in a weight ratio of 75 : 25. The final composition of the filled protein gel was 2.7 % (w/w) of WPI aggregates and 10 % (w/w) of sunflower oil.

The filled gel composition so obtained had a yogurt like texture. The filled gel composition so obtained had a discharge time of 18 seconds as measured with a funnel of Posthumus (outlet diameter of 8mm) at 6 °C. The microstructure, rheology and stability of the filled gel composition thus obtained were analysed. The results obtained are presented in Table 1.

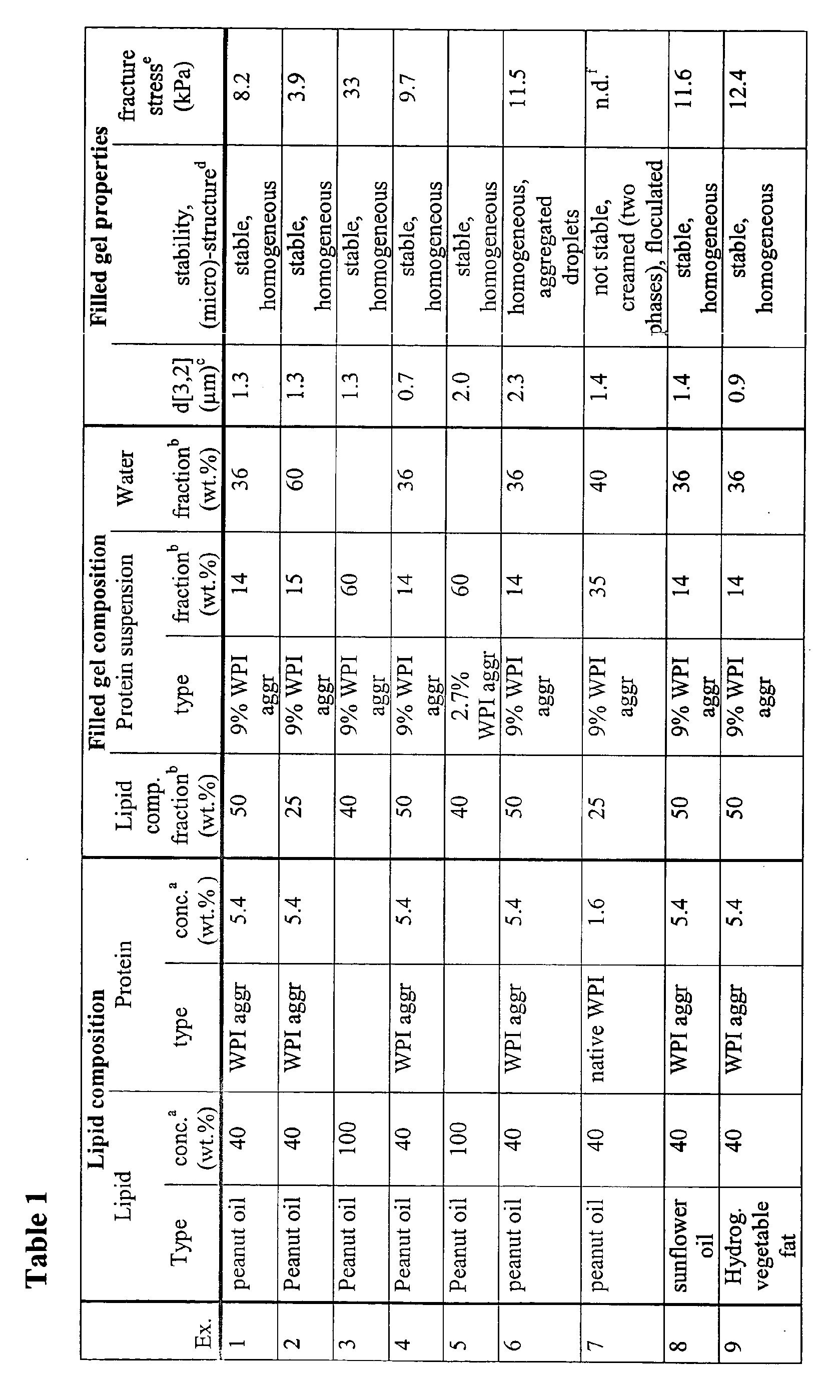

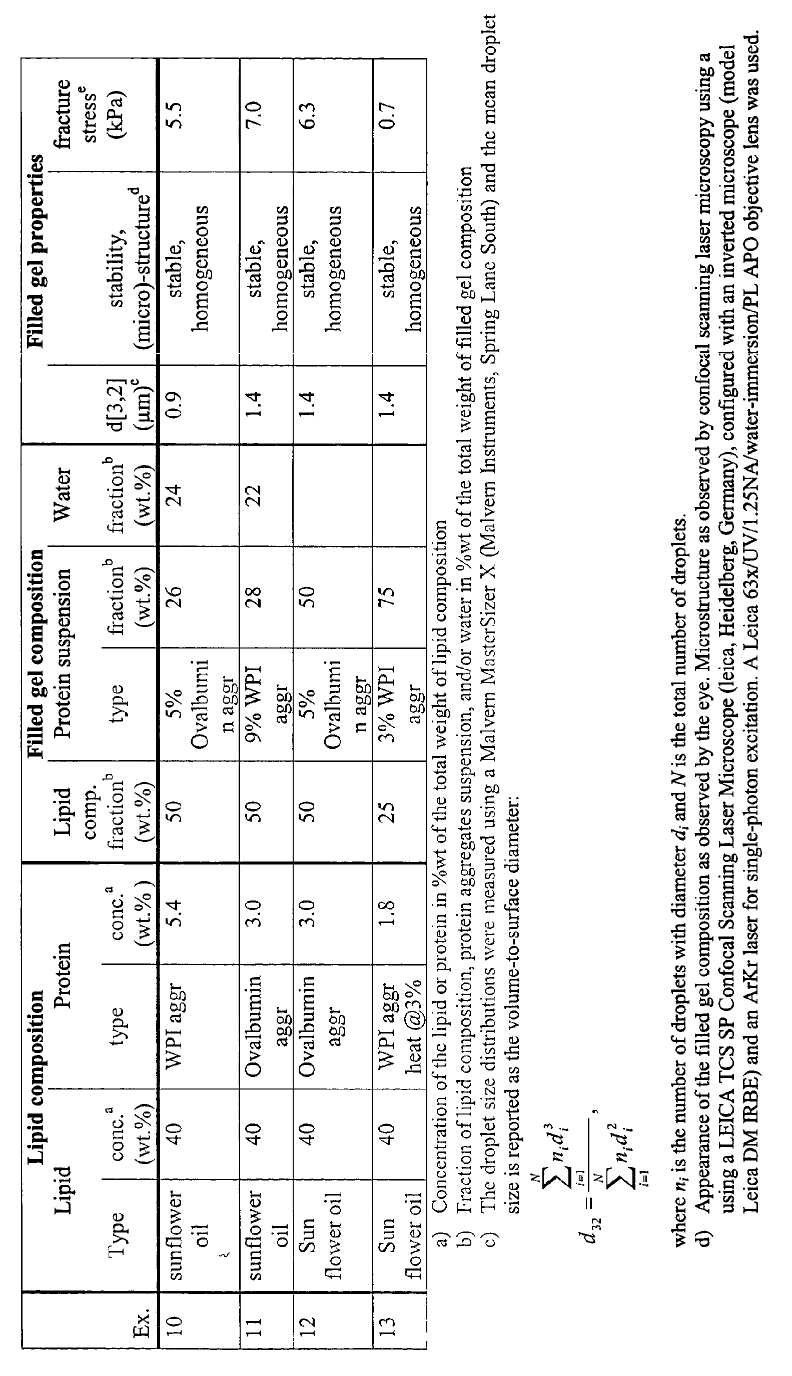

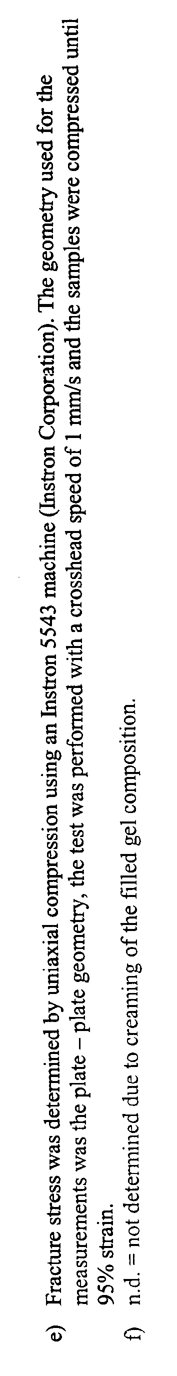

## Claims

1. A process of preparing a water-continuous filled gel composition, said process comprising the steps of:
a. providing an aqueous suspension containing at least 0.5 wt.% of protein aggregates capable of cold gelation;
b. combining said aqueous suspension with a composition containing at least
5 wt.% lipids in a weight ratio of 97:3 to 10:90 to produce a filled suspension;
c. adding a pH lowering agent to the aqueous suspension, the lipids containing composition and/or the filled suspension; and
d. allowing the pH of the filled suspension to decrease to a level causing cold gelation of the protein aggregates.

2. Process according to claim 1, wherein the lipids containing composition is a lipid-in-water emulsion.

3. Process according to claim 2, wherein the lipid-in-water emulsion contains at least 0.5 wt.% protein aggregates capable of gold gelation.

4. Process according to any one of the preceding claims, wherein the pH lowering agent is a slow release acidogen or an acid producing micro-organism.

5. Process according to claim 4, wherein the slow release acidogen is an acid anhydride, a lactide, a lactone or a combination thereof.

6. Process according to any one of the preceding claims, wherein the pH lowering agent is added not earlier than 10 minutes before and not later than 10 minutes after the moment the aqueous composition is combined with the lipids containing composition.

7. Process according to any one of the preceding claims wherein the pH of the filled suspension is decreased in step d. to below 6.0, preferably to below 5.7.

8. Process according to any one of the preceding claims, wherein the filled gel composition contain 40-98 wt.% water; 0.5-50 wt.% fat and 1-20 wt.% of gelled protein.

9. Process according to any one of the preceding claims wherein the protein present in the protein aggregates is selected from the group consisting of whey proteins, soy proteins, egg proteins, blood serum proteins, wheat germ proteins and mixtures thereof.

10. Process according to any one of the preceding claims, wherein following the addition of the acidogen the filled suspension is packaged in a sealed container and cold gelation is allowed to largely occur within the sealed container.
